# EUROPÄISCHE PATENTANMELDUNG

(11) **EP 0 831 630 A1**
(43) Veröffentlichungstag der Anmeldung: **25.03.1998**
(21) Anmeldenummer: 97114007.4
(22) Anmeldetag: 13.08.1997
(51) Int. Cl.: H04M 1/274, H04M 1/66, H04M 1/65

(54) **Kommunikationsendgerät**

(30) Priorität: 06.09.1996 DE 19636257
(71) Anmelder: SIEMENS AKTIENGESELLSCHAFT, 80333 München (DE)
(72) Erfinder: Schlier, Gerald, 83043 Bad Aibling (DE)

(57) **Zusammenfassung**

Die Erfindung betrifft ein Kommunikationsendgerät (KE) mit einer Signalisierungseinrichtung (SE), mit einem Rufnummernspeicher (RS) zur Aufnahme mindestens einer Rufnummer, mit einem Sprachspeicher (SP) zu Aufnahme mindestens einer Nachricht, die zur Rufnummer gehört, und mit Steuermitteln (HP, ABS) zur vorbestimmten Abgabe einer Rufnummer an die Signalisierungseinrichtung (SE) für den Verbindungsaufbau zu einem gerufenen Teilnehmer, und zum anschließenden Übertragen der zugehörigen Nachricht zu diesem Teilnehmer.

## Beschreibung

Die Erfindung betrifft ein Kommunikationsendgerät, insbesondere mit einer Signalisierungseinrichtung, mit einem Rufnummernspeicher, und mit einem Sprachspeicher.

Ein Kommunikationsendgerät, beispielsweise ein digitales Komforttelefon oder ein digitaler Anrufbeantworter, kann mit festgespeicherten Phrasen zu Bedienerführung, zur Zeit- und Datumsansage ausgestattet sein.

Bei einem Anrufbeantworter erfolgt die Speicherung sämtlicher Sprachdaten, der Ansagen, der eingehenden Nachrichten, und der Phrasen vorzugsweise in nichtflüchtigen Speichern, beispielsweise in sogenannten Flash-RAMs. Ein integrierter Schaltkreis, ein sog. Anrufbeantworterschaltkreis, steuert die Aufnahme und spätere Wiedergabe der eingegangenen Nachrichten.

Bei der Kommunikation über ein Telefon ergibt sich oft das Problem, daß eine dringende Nachricht zu einem Teilnehmer übertragen werden muß, und dieser Teilnehmer nicht erreicht werden kann. Gründe hierfür können ein besetzter Anschluß oder die momentane Abwesenheit des Teilnehmers sein, oder das Telefon ist beispielsweise auf Grund der Zeitverschiebung nicht besetzt. Bisher konnten diese Probleme nur durch die Verwendung einer Rufweiterschaltung oder mit Hilfe des Anrufbeantworters beim gerufenen Teilnehmer gelöst werden, auf den der rufende Teilnehmer eine Nachricht spricht.

Der Erfindung liegt die Aufgabe zugrunde, eine weitere Möglichkeit für die Nachrichtenübermittlung zu einem Kommunikationsteilnehmer anzugeben.

Diese Aufgabe wird erfindungsgemäß durch die im Patentanspruch 1 bzw. 2 angegebenen Merkmale gelöst.

Das erfindungsgemäße Kommunikationsendgerät kann, zumindest bei einer ersten Ausführung der Erfindung, an beliebige Schnittstellen des Fernsprechnetzes angeschlossen werden. Das Fernsprechnetz kann analog oder digital sein, oder es kann sich um eine Nebenstellenanlage handeln.

Im folgenden wird die Erfindung anhand eines in der Zeichnung dargestellten Ausführungsbeispieles beschrieben. Dabei zeigen
Figur 1 ein Blockschaltbild eines Kommunikationsendgerätes,
   und
Figur 2 ein Ablaufdiagramm.

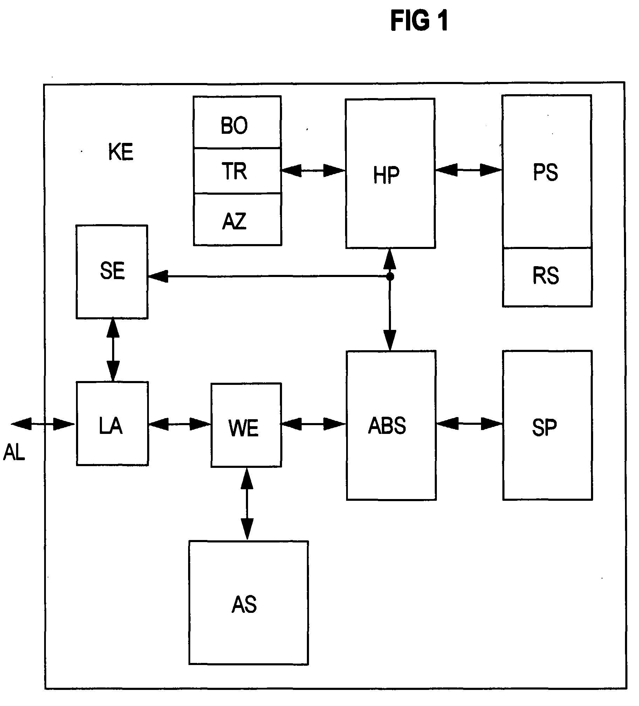

In Figur 1 ist ein digitales Kommunikationsendgerät KE mit einem Hauptprozessor HP dargestellt. Der Hauptprozessor HP ist mit einem Programmspeicher PS und einer Bedienoberfläche BO verbunden. Der Programmspeicher PS ist vorzugsweise durch einen ROM-Speicherbaustein realisiert. Die Bedienoberfläche BO kann einen Tastaturblock TR und eine Anzeigeeinrichtung AZ aufweisen. Weiter ist der Hauptprozessor HP mit einer Signalisierungseinrichtung SE verbunden, die an einer Leitungsanschaltung LA angeschlossen ist.

Der Hauptprozessor HP ist zur Realisierung der Erfindung mit einem Anrufbeantworterschaltkreis ABS verbunden, an dem ein Sprachspeicher SP angeschaltet ist. Weiter ist beispielsweise im Programmspeicher PS ein Bereich zur Aufnahme von Rufnummern vorgesehen, ein sog. Rufnummernspeicher RS.

Der Anrufbeantworterschaltkreis ABS ist in an sich bekannter Weise über eine Wandlereinrichtung WE zur digital-analog und analog-digital Wandlung ebenfalls mit der Leitungsanschaltung LA verbunden. Über eine Anschlußleitung AL ist die Leitungsanschaltung LA mit einem nicht näher dargestellten Kommunikationsnetz verbunden.

Die Wandlereinrichtung WE ist mit einer akustischen Schnittstelle AS verbunden, die die Sprachein- und -ausgabe mit einem Teilnehmer ermöglicht, und hierzu beispielsweise ein Mikrophon und einen Lautsprecher aufweist. Diese sind für die Erfindung von untergeordneter Bedeutung und in der Figur nicht explizit dargestellt.

Bei der Erfindung wird von einem rufenden Teilnehmer über sein Kommunikationsendgerät KE automatisch eine Nachricht zu dem gerufenen Teilnehmer übertragen. Hierzu wird vom Teilnehmer eine besondere Funktion des Kommunikationsendgerätes KE gewählt, beispielsweise die Funktion 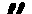 Automatische Nachricht übermitteln". Zur Durchführung dieser Funktion wird eine Rufnummer über den Tastaturblock TR eingegeben und in Rufnummernspeicher abgelegt. Über die akustische Schnittstelle AS wird eine zu dieser Rufnummer gehörende Nachricht eingegeben und im Sprachspeicher SP abgespeichert.

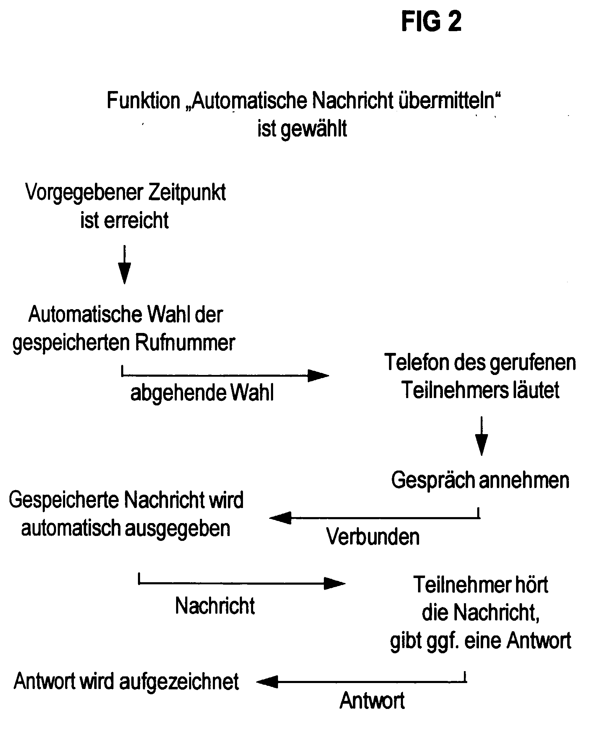

Bei einer ersten Ausführungsform der Erfindung (siehe Figur 2) wird, beispielsweise zu einem vorgegebenen Zeitpunkt, vom Hauptprozessor HP eine vorbestimmte Rufnummer aus dem Rufnummernspeicher RS abgerufen, und über die Signalisierungseinrichtung SE eine Verbindung zu einem gerufenen Teilnehmer aufgebaut. Der Versuch des Verbindungsaufbaues kann gegebenenfalls auch automatisch mehrfach wiederholt werden. Wenn die Verbindung zum gerufenen Teilnehmer eingerichtet ist, wird die zu dieser Rufnummer gehörende Nachricht vom Anrufbeantworterschaltkreis ABS aus dem Sprachspeicher SP abgerufen und übertragen.

Statt einer einzigen Rufnummer können für einen gerufenen Teilnehmer können auch alternativ mehrere Nummern im Rufnummernspeicher RS gespeichert werden. Es können auch weitere Parameter für den Verbindungsaufbau, wie Startzeit des ersten Anrufes, Stopzeit und Pausen zwischen den Rufwiederholungen abgespeichert werden.

Bei einer zweiten Ausführungsform der Erfindung wird die Verbindung zu einem vorbestimmten Kommunikationspartner nicht aktiv vom Teilnehmer aufgebaut, der die Funktion 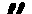 Automatische Nachricht übermitteln" gewählt hat. Dieser Teilnehmer wird von dem Kommunikationspartner angerufen, für den der Teilnehmer eine Nachricht im Sprachspeicher SP, zugehörig zu einer Rufnummer im Rufnummernspeicher RS, gespeichert hat. Die Rufnummer des rufenden Kommunikationspartners wird, beispielsweise im Hauptprozessor HP, mit der Rufnummer im Rufnummernspeicher RS verglichen. Bei Übereinstimmung wird die zugehörige Nachricht aus dem Sprachspeicher SP zum rufenden Kommunikationspartner übertragen. Bei dieser Ausführungsform der Erfindung muß die Rufnummer des rufenden Teilnehmers vom Kommunikationsnetz, beispielsweise ISDN, zum Kommunikationsendgerät KE übertragen werden.

Mit dem erfindungsgemäß ausgebildeten Kommunikationsendgerät KE können Nachrichten, ausgehend von dem Teilnehmer der die Nachricht übermitteln will, entweder als rufender oder auch als gerufener Teilnehmer zum vorbestimmten Kommunikationspartner übertragen werden.

Das Kommunikationsendgerät KE kann beispielsweise durch ein sog. Komforttelefon mit integriertem Anrufbeantworter realisiert sein. Der Anrufbeantworterschaltkreis ABS und der Sprachspeicher SP sind Teile dieses Anrufbeantworters. Die Steuerung des Telefons muß die Zuordnung der Rufnummern zu den entsprechenden Nachrichten sicherstellen.

Bei einer Ausgestaltung der Erfindung wird eine Antwort des gerufenen Teilnehmers, wiederum zugehörig zu der entsprechenden Rufnummer, im Sprachspeicher SP abgespeichert. Der Benutzer des Kommunikationsendgerätes KE kann diese gespeicherte Antwort, wie bei einem herkömmlichen Anrufbeantworter üblich, zu einem beliebigen Zeitpunkt, lokal oder per Fernabfrage, abrufen.

Der Sprachspeicher SP und der Rufnummernspeicher RS können auch in einem gemeinsamen Speicherbaustein realisiert sein.

Das erfindungsgemäß mit der Funktion 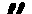 Automatische Nachricht übermitteln" ausgebildete Kommunikationsendgerät KE kann beispielsweise ohne Änderung der Hardware mit einem softwaregesteuerten Fernsprecher mit integriertem Anrufbeantworter realisiert werden.

Das Kommunikationsendgerät KE kann auch durch einen Personal-Computer realisiert sein.

### Bezugszeichenliste

- KE: Kommunikationsendgerät
- BO: Bedienoberfläche
- TR: Tastaturblock
- AZ: Anzeigeeinrichtung
- HP: Hauptprozessor
- PS: Programmspeicher
- LA: Leitungsanschaltung
- WE: Wandlereinrichtung
- ABS: Anrufbeantworterschaltkreis
- SP: Sprachspeicher
- AS: akustische Schnittstelle
- AL: Anschlußleitung
- SE: Signalisierungseinrichtung
- RS: Rufnummernspeicher

## Patentansprüche

1. Kommunikationsendgerät (KE)
mit einer Signalisierungseinrichtung (SE),
mit einem Rufnummernspeicher (RS) zur Aufnahme mindestens einer Rufnummer,
mit einem Sprachspeicher (SP) zu Aufnahme mindestens einer Nachricht, die zur Rufnummer gehört, und
mit Steuermitteln (HP, ABS) zur vorbestimmten Abgabe einer Rufnummer an die Signalisierungseinrichtung (SE) für den Verbindungsaufbau zu einem gerufenen Teilnehmer, und zum anschließenden Übertragen der zugehörigen Nachricht zu diesem Teilnehmer.

2. Kommunikationsendgerät (KE)
mit einem Rufnummernspeicher (RS) zur Aufnahme mindestens einer Rufnummer.
mit einem Sprachspeicher (SP) zu Aufnahme mindestens einer Nachricht, die zur Rufnummer gehört, und
mit Steuermitteln (HP, ABS) zum Vergleich der Rufnummer eines rufenden Teilnehmers mit der gespeicherten, und bei Übereinstimmung zum anschließenden Übertragen der zugehörigen Nachricht zu diesem Teilnehmer.

3. Kommunikationsendgerät (KE) nach Anspruch 1 oder 2 mit Steuermitteln (HP, ABS) zur anschließenden Aufzeichnung der Antwort des Kommunikationspartners in den Sprachspeicher (SP).
